# FASCICULE DE BREVET EUROPEEN

(11) **EP 0 711 014 B1**
(45) Date de publication et mention de la délivrance du brevet: **24.01.2001**
(21) Numéro de dépôt: 95402363.6
(22) Date de dépôt: 24.10.1995
(51) Int. Cl.: H02H 3/24, H02H 3/087

(54) **Circuit de protection pour alimentation continue et son utilisation associé à une alimentation continue**
Schutzschaltung für Gleichstromversorgung und Verfahren zu ihrer Verwendung
Protective circuit for the power supply and method of use

(30) Priorité: 04.11.1994 FR 9413194
(43) Date de publication de la demande: 08.05.1996
(73) Titulaire: THOMSON-CSF, 75008 Paris (FR)
(72) Inventeur: Lebbolo, Guillaume, F-92402 Courbevoie Cedex (FR); Prevot, Claude, F-92402 Courbevoie Cedex (FR); Rincent, Michel, F-92402 Courbevoie Cedex (FR)
(74) Mandataire: Albert, Claude

(56) Documents cités:
- DE-U- 9 311 361
- US-A- 4 835 649
- IBM TECHNICAL DISCLOSURE BULLETIN, vol. 18, no. 8, Janvier 1976 NEW YORK, US, page 2430 ANONYMOUS 'Overcurrent Protector With Automatic Reset. January 1976.'

## Description

La présente invention concerne le domaine des alimentations continues et de leur protection et plus précisément un circuit disposé en sortie d'alimentation et destiné d'une part à protéger le circuit utilisateur contre des inversions de polarité et d'autre part à préserver les réserves d'énergie du circuit utilisateur lors de coupures ou courts-circuits brefs de l'alimentation.

Il est connu de réaliser un tel circuit de protection en disposant une diode en série dans la ligne entre l'alimentation et son circuit utilisateur. L'inconvénient de la protection ainsi réalisée est que, la diode introduisant une chute de tension de l'ordre du volt, il en résulte une dissipation d'énergie non négligeable.

La présente invention a pour but de proposer un circuit de protection qui entraîne une dissipation d'énergie nettement inférieure à celle entraînée, dans les mêmes conditions, par une diode de protection.

Ceci est obtenu à l'aide d'un transistor de puissance de type MOSFET convenablement commandé sur sa grille et dont la source et le drain sont introduits en série dans la ligne entre l'alimentation et le circuit d'utilisation de cette alimentation.

Un circuit de protection de cette sorte selon le préambule de la revendication 1 est décrit dans le document DE-U-93 11 361.

Selon l'invention il est proposé un circuit de protection pour alimentation délivrant une tension continue, V, entre une première et une seconde borne, caractérisé en ce qu'il comporte un transistor de puissance MOSFET dont la source et le drain sont placés en série avec la première borne, un circuit de polarisation branché entre les deux bornes pour élaborer sur une sortie une tension Vg de valeur donnée quand et seulement quand la tension V est supérieure à une valeur prédéterminée, cette valeur donnée étant telle que la tension Vg rend le transistor de puissance conducteur quand elle est appliquée sur sa grille, et un circuit de commande pour coupler la sortie du circuit de polarisation à la grille du transistor de puissance et pour surveiller la différence de tension entre le drain et la source du transistor de puissance afin, lorsque la différence dépasse un seuil donné, d'empêcher l'application de la tension Vg sur la grille du transistor de puissance et ainsi de bloquer le transistor de puissance.

La présente invention sera mieux comprise et d'autres caractéristiques apparaîtront à l'aide de la description ci-après et des figures s'y rapportant qui représentent :
- les figures 1 et 2, des possibilités de montages de transistors de puissance dans des circuits selon l'invention,
- la figure 3 un schéma électrique simplifié d'un circuit selon l'invention,
- la figure 4 un schéma électrique d'ensemble d'un circuit selon l'invention.

Sur les différents schémas les éléments correspondants sont désignés par les mêmes repères.

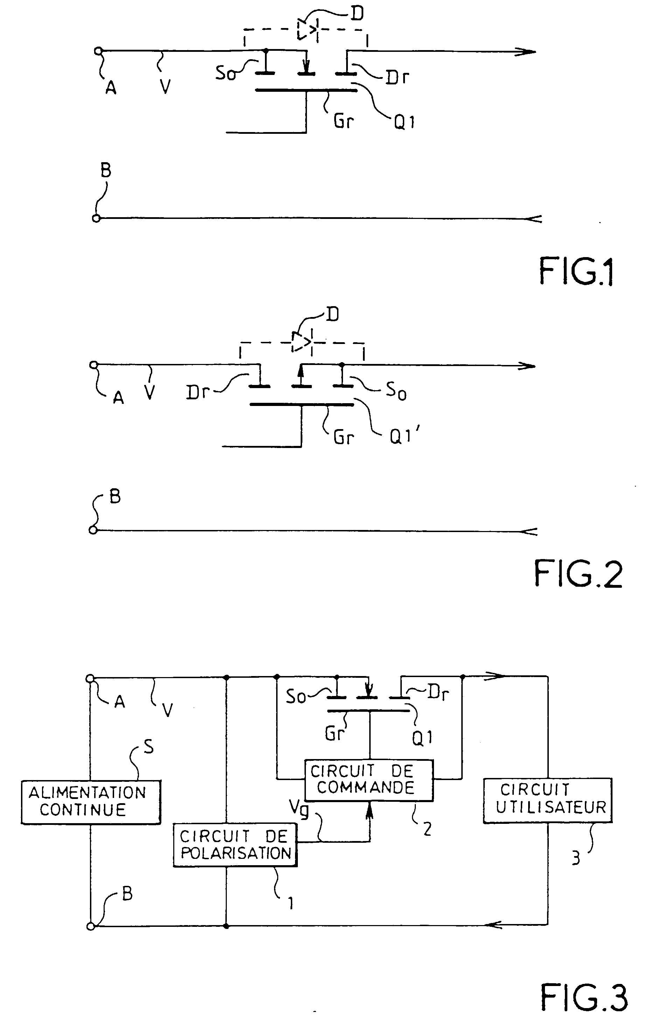

La figure 1 montre les deux bornes de sortie A, B d'une alimentation continue qui délivre une tension V; en série avec la borne A, dans le conducteur de "sortie courant", sont insérés la source So et le drain Dr d'un transistor MOSFET canal N, Q1. Pour rendre ce transistor passant une tension de commande supérieure à V doit être appliquée sur sa grille Gr. La diode D que constitue le transistor Q1, quand il est bloqué, a été représentée en traits interrompus ; il est à noter que cette diode, quand le transistor Q1 est bloqué, préserve les éventuelles réserves d'énergie situées en aval dans le circuit utilisateur, non représenté, branché entre le drain du transistor et la borne B.

La figure 2 représente un montage correspondant à celui de la figure 1 mais avec un transistor MOSFET canal P, Q1'. Dans ce montage la position du drain Dr et de la source So sont inversés par rapport au montage selon la figure 1 mais la diode D que constitue le transistor Q1' bloqué, préserve, elle aussi, les réserves éventuelles d'énergie du circuit utilisateur.

Pour être rendu passant le transistor Q1' ne nécessite sur sa grille qu'une tension inférieure à la tension V; l'emploi d'un transistor canal P semble donc plus intéressant mais il n'en est rien du fait, en particulier, qu'un transistor MOSFET canal N présente une résistance interne en régime linéaire nettement plus faible qu'un transistor MOSFET canal P or c'est justement une résistance interne aussi faible que possible qui est recherchée pour le circuit de protection, afin de minimiser les pertes d'énergie dues à ce circuit. Dans la suite de la description le transistor MOSFET inséré en protection entre l'alimentation et le circuit utilisateur sera un transistor MOSFET canal N.

La figure 3 est un schéma électrique simplifié sur lequel sont représentés une alimentation continue S avec ses bornes de sortie A, B, un bloc 3 schématisant un circuit utilisateur et, entre les bornes A, B et le bloc 3, un circuit de protection comportant un circuit de polarisation 1, un circuit de commande 2 et un transistor de puissance MOSFET canal N, Q1.

Le transistor Q1 est branché, comme sur la figure 1, en série dans le conducteur de "sortie courant" provenant de la borne A et aboutissant au circuit utilisateur 3 tandis que le conducteur de retour va du circuit utilisateur à la borne B.

Le circuit de polarisation 1 est branché entre les bornes A et B, il reçoit une tension continue, V, délivrée par l'alimentation ; son rôle est de fournir une tension Vg de valeur donnée, si et seulement si la tension V est supérieure à une valeur prédéterminée ; et la valeur de Vg est choisie de telle sorte que, lorsque cette tension est appliquée sur la grille du transistor Q1, elle rende ce transistor conducteur.

La tension Vg est appliquée sur la grille du transistor Q1, à travers le circuit de commande 2. Le circuit de commande 2 surveille la différence entre la tension aux bornes du circuit utilisateur 3 et la tension V ; lorsque cette différence dépasse un seuil donné, le circuit de commande empêche l'application de la tension Vg sur la grille du transistor Q1 afin de bloquer le transistor.

La tension Vg, comme il a été indiqué lors de la description de la figure 1, est supérieure à V en fonctionnement normal de l'alimentation. Dans l'exemple de réalisation décrit ici V=28 volts et Vg=40 volts

Le circuit de polarisation 1 peut être considéré comme étant constitué de deux circuits en cascade :
- un circuit à seuil qui, tant que la tension V est supérieure à une valeur donnée égale ici à 16 volts, fournit une tension continue Va,
- un circuit de transformation de tension qui, à partir de la tension Va élabore la tension Vg; ce circuit de transformation de tension est constitué, dans l'exemple décrit, d'un oscillateur suivi d'une "pompe à diode" aussi appelée doubleur Schenkel, ou générateur de type Greinacher.

Le rôle du circuit de commande est de bloquer le transistor Q1 en cas de court-circuit ou d'inversion de polarité de l'alimentation continue ; pour cela il surveille la tension entre le drain du transistor Q1 et la borne B et, lorsque cette tension est supérieure à la tension V, bloque le transistor Q1 en court-circuitant la commande de grille.

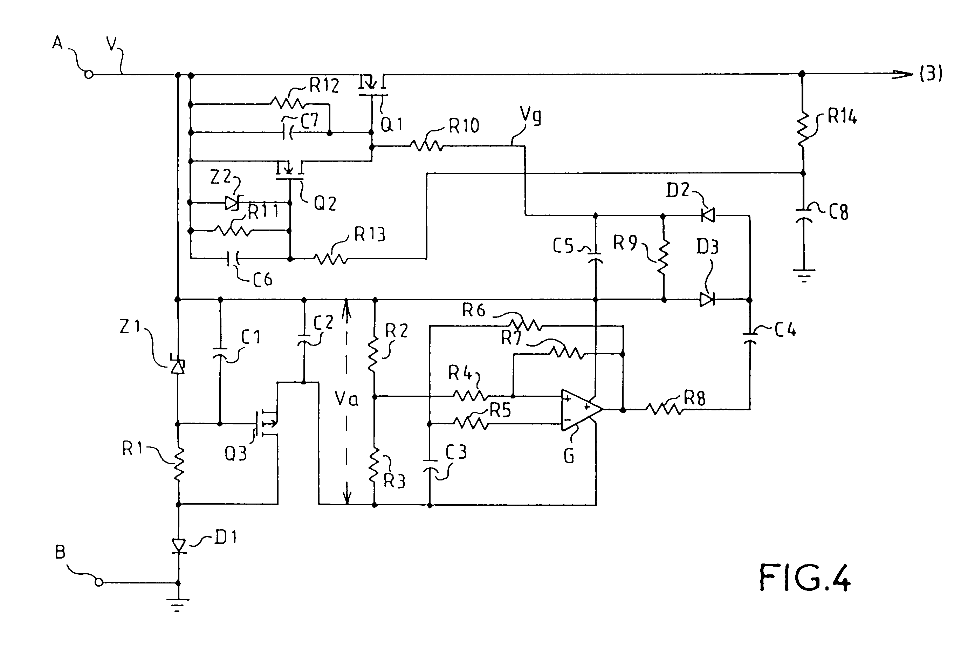

La figure 4 est un schéma plus détaillé d'un circuit de protection selon la figure 3 sur lequel apparaissent notamment le transistor Q1 et les bornes AB déjà représentés sur la figure 3.

Le circuit de polarisation 1 de la figure 3 comporte, selon la figure 4, des résistances, R1-R9, des condensateurs, C1-C4, des diodes Z1, D1-D3, un transistor, Q3, et un circuit G qui est un comparateur qui, du fait du montage, est astable et fonctionne en multivilbrateur.

Le circuit à seuil dont il a été question lors de la description du circuit de polarisation 1 de la figure 3 comporte les éléments Z1, R1, D1, Q3, C1 et C2. La diode Z1 est une diode Zener qui a sa cathode reliée à la borne A sur laquelle est appliquée, en fonctionnement normal, la tension V de 28 volts. La diode Z1 est couplée, à travers la résistance R1, à l'anode de la diode D1 dont la cathode est reliée à la borne B qui est elle-même reliée à la masse. Le condensateur C1 est monté en parallèle sur la diode Z1. Le transistor Q3 est un transistor MOSFET canal P dont la grille, la source et le drain sont respectivement reliés à l'anode de la diode Z1, à la première borne du condensateur C2 dont la seconde borne est reliée à la borne A et à l'anode de la diode D1.

La diode Z1 a une tension de Zener de 15 volts, c'est cette diode qui définit la limite inférieure de la tension d'alimentation V à partir de laquelle le transistor de puissance Q1 peut être commandé pour être rendu passant. Pour une tension V de 28 volts la tension sur la grille de Q3 est de 28V-15V=13V; comme la tension source-grille est d'environ 3V, la tension sur la source du transistor Q3 est de 13V+3V=16V par rapport à la masse, ce qui représente une tension continue différentielle Va de 12 volts aux bornes du condensateur C2.

La tension Va conserve cette valeur de 12 volts quelle que soit la valeur de la tension d'alimentation V à condition toutefois que la tension V soit supérieure à 15V+1V=16V, le 1V dans cette équation correspondant à la chute de tension dans la diode D1 ; cette diode D1 permet le blocage du circuit de protection en cas d'inversion de polarité.

C'est la tension Va qui est appliquée à l'entrée de l'oscillateur dont il a été question lors de la description du circuit de polarisation 1 de la figure 3.

L'oscillateur comporte les éléments R2-R8, C3 et G tandis que la pompe à diode, dont il a également été question lors de la description de la figure 3, comporte les éléments C4, C5, R9, R10, D2, D3. Les résistances R2, R3 forment un montage en série qui est monté en parallèle sur le condensateur C2. La résistance R4 relie le point commun des résistances R2, R3 à une entrée + du circuit G, dont une entrée est reliée, par la résistance R5 suivie du condensateur C3, à la source du transistor Q3. Le circuit G a une sortie et cette sortie est reliée à travers les résistances R6, R7, R8 respectivement au point commun entre la résistance R5 et le condensateur C3, à son entrée + et à la première borne du condensateur C4. Les deux accès de polarisation du circuit G sont reliés respectivement aux deux bornes du condensateur C5.

Ainsi monté l'oscillateur est polarisé par la tension différentielle Va de 12 volts, avec la tension V-Va=28-12=16 volts qui lui sert de potentiel de référence ; c'est un oscillateur du type à relaxation, qui fournit un signal carré de 12 volts à 22,7 kHz.

La pompe à diode comporte les éléments C4, C5, D2, D3, R9; il est entendu que la résistance R8 de l'oscillateur et le condensateur C4 de la pompe à diode constituent en fait, à eux deux, la liaison entre ces deux circuits.

Le condensateur C4 qui est relié par sa première borne à la résistance R8, est relié par sa seconde borne à l'anode de la diode D2 et à la cathode de la diode D3. La cathode de la diode D2 est reliée à travers une résistance R10, qui fait partie du circuit de commande 2 selon la figure 3, à la grille du transistor Q1 et l'anode de la diode D3 est reliée à la borne A. La résistance R9 et le condensateur C5 sont montés en parallèle entre la cathode de la diode D2 et l'anode de la diode D3.

L'oscillateur permet d'entretenir la tension aux bornes du condensateur C5 tant que l'énergie fournie est inférieure à l'énergie consommée.

La pompe à diode permet de fournir 12 volts aux bornes du condensateur C5. Ces 12 volts sont ajoutés à la tension d'alimentation V=28 volts étant donné que le condensateur C5 est relié à la borne A. Ainsi la tension délivrée par la pompe à diode pour polariser la grille du transistor de puissance Q1 est de 28V+12V=40V pour une tension d'alimentation V nominale de 28 volts, alors que la source du transistor Q1 reçoit une tension de 28 volts. Le transistor Q1 est donc parfaitement polarisé pour être conducteur; il s'agit dans l'exemple décrit d'un transistor MOS de type 75N10 et ce transistor présente une résistance interne source-drain en régime linéaire de fonctionnement, d'environ 20 m.ohms. A titre d'exemple la chute de tension qu'entraîne le circuit de protection, pour un courant de 10A dans le circuit utilisateur 3 selon la figure 3, est de 0,2V en raison du transistor Q1 et 0,1V en raison des connexions, ce qui au total fait 0,3V.

Le circuit de commande 2 selon la figure 3 comporte, selon la figure 4, des résistances R10-R14, des condensateurs C6-C8, une diode 22 et un transistor Q2. Le transistor Q2 est un transistor MOSFET canal N dont la source et le drain sont respectivement reliés à la source et à la grille du transistor de puissance Q1 et dont la grille est couplée par la résistance R13 aux premières extrémités de la résistance R14 et du condensateur C8; les secondes extrémités de la résistance R14 et du condensateur C8 sont respectivement reliées au drain du transistor Q1 et à la masse c'est-à-dire à la borne B de l'alimentation. La diode Z2 est une diode Zener présentant une tension de Zener de 7,5V dont l'anode et la cathode sont respectivement reliées à la source et à la grille du transistor Q2. La résistance R11 et le condensateur C6 sont montés en parallèle et branchés aux bornes de la diode Z2. La résistance R12 et le condensateur C7 sont montés en parallèle et branchés entre la source et le drain du transistor Q2.

Tant que la tension d'alimentation V est supérieure à la tension ramenée par la résistance R13, donc, en particulier, tant que l'alimentation continue n'est pas court-circuitée ou que la polarité de sa tension de sortie n'est pas inversée, la tension sur la grille du transistor Q2 est inférieure à la tension sur sa source et le transistor Q2 est donc bloqué ; la tension Vg qui provient du circuit de polarisation 2 décrit à l'aide des figures 3 et 4, est appliquée sur la grille du transistor Q1 rendant ce transistor conducteur.

Par contre en cas de court-circuit de l'alimentation continue ou d'inversion de sa tension de sortie, le transistor Q2 conduit, créant un court-circuit entre la grille et la source du transistor Q1 ; le transistor Q1 est alors bloqué. Cependant le seuil de saturation du transistor Q2 ainsi que la constante de temps d'intégration due aux éléments R14, C18 permet de ne pas bloquer intempestivement le transistor Q1.

L'invention n'est pas limitée à l'exemple décrit à l'aide des figures ; en effet, comme indiqué à l'aide de la figure 3, deux circuits sont à réaliser
- un circuit de polarisation pour délivrer une tension Vg tant que la tension V est supérieure à une valeur donnée
- un circuit de commande pour empêcher la tension Vg d'être appliquée sur la grille du transistor Q1 lorsque la différence de tension entre le drain et la source du transistor de puissance est supérieure à une valeur prédéterminée
or différentes possibilités s'offrent à l'homme du métier, dans la technologie courante, pour réaliser de tels circuits.

Il est de plus à noter que l'invention s'applique aussi bien au cas où l'alimentation fournit une tension positive qu'une tension négative et que, par exemple, pour une tension V de -28 volts le schéma selon la figure 4 peut être utilisé à condition que la borne A soit à la masse et la borne B au -28 volts.

## Revendications

1. Circuit de protection pour alimentation délivrant une tension continue, V, entre une première (A) et une seconde (B) borne, comportant un transistor de puissance MOSFET (Q1 ) dont la source et le drain sont placés en série avec la première borne, un circuit de polarisation (1) branché entre les deux bornes pour élaborer sur une sortie une tension Vg de valeur donnée quand et seulement quand la tension V est supérieure à une valeur prédéterminée, cette valeur donnée étant telle que la tension Vg rend le transistor de puissance conducteur quand elle est appliquée sur sa grille, caractérisé en ce que le circuit de protection comporte un circuit de commande (2) pour coupler la sortie du circuit de polarisation à la grille du transistor de puissance et pour surveiller la différence de tension entre le drain et la source du transistor de puissance afin, lorsque la différence dépasse un seuil donné, d'empêcher l'application de la tension Vg sur la grille du transistor de puissance et ainsi de bloquer le transistor de puissance.

2. Circuit de protection selon la revendication 1, caractérisé en ce que le circuit de polarisation comporte en série un circuit à seuil de tension (Z1, C1, C2, R1, D1, Q3) branché entre la première et la seconde borne et un circuit de transformation de tension (R2-R9, C3-C5, D2, D3, G).

3. Circuit de protection selon la revendication 1, caractérisé en ce que le circuit de commande (R10-R14, C6-C8, Z2, Q2) comporte des moyens de contrôle (R11, R13, R14, C6, C8, Z2) pour contrôler la différence de potentiel entre le drain et la source du transistor de puissance (Q1) et des moyens de blocage (Q2) pour, sous la commande des moyens de contrôle, court-circuiter la grille et la source du transistor de puissance.

4. Utilisation d'un circuit de protection selon au moins une des revendications précédentes, associé à une alimentation continue, ce circuit étant branché entre les bornes de sortie de l'alimentation.

## Patentansprüche

1. Schutzschaltung für eine Versorgungseinrichtung, die zwischen einem ersten Anschluß (A) und einem zweiten Anschluß (B) eine Gleichspannung V liefert, mit einem Leistungstransistor MOSFET (Q1), dessen Source und dessen Drain mit dem ersten Anschluß in Serie geschaltet sind, einer Vorspannungsschaltung (1), die zwischen die beiden Anschlüsse geschaltet ist, um an einem Ausgang eine Spannung Vg mit gegebenem Wert aufzubauen, dann und nur dann, wenn die Spannung V größer als ein vorgegebener Wert ist, wobei dieser gegebene Wert derart ist, daß die Spannung Vg den Leistungstransistor auf Durchlaß schaltet, wenn sie an sein Gate angelegt wird, dadurch gekennzeichnet, daß die Schutzschaltung eine Steuerschaltung (2) umfaßt, um den Ausgang der Vorspannungsschaltung mit dem Gate des Leistungstransistors zu koppeln und um die Spannungsdifferenz zwischen dem Drain und der Source des Leistungstransistors zu überwachen, um dann, wenn die Differenz einen gegebenen Schwellenwert übersteigt, das Anlegen der Spannung Vg an das Gate des Leistungstransistors zu verhindern und somit den Leistungstransistor zu sperren.

2. Schutzschaltung nach Anspruch 1, dadurch gekennzeichnet, daß die Vorspannungsschaltung in Serie eine Spannungsschwellen-Schaltung (Z1, C1, C2, R1, D1, Q3), die zwischen den ersten und den zweiten Anschluß geschaltet ist, und eine Spannungstransformationsschaltung (R2-R9, C3-C5, D2, D3, G) umfaßt.

3. Schutzschaltung nach Anspruch 1, dadurch gekennzeichnet, daß die Steuerschaltung (R10-R14, C6-C8, Z2, Q2) Steuermittel (R11, R13, R14, C6, C8, Z2) zum Steuern der Potentialdifferenz zwischen dem Drain und der Source des Leistungstransistors (Q1) und Sperrmittel (Q2), um unter der Steuerung der Steuermittel das Gate und die Source des Leistungstransistors kurzzuschließen, umfaßt.

4. Anwendung einer Schutzschaltung nach wenigstens einem der vorangehenden Ansprüche, die einer Gleichspannungsversorgungseinrichtung zugeordnet ist, wobei diese Schaltung zwischen die Ausgangsanschlüsse der Versorgungseinrichtung geschaltet ist.

## Claims

1. Protection circuit for a supply delivering a DC voltage V, between a first terminal (A) and a second terminal (B), comprising a MOSFET power transistor (Q1) having a source and a drain placed in series with the first terminal, a bias circuit (1) connected between the two terminals for the preparation, at its output, of a voltage Vg with a given value when and only when the voltage V is greater than a predetermined value, this given value being such that the voltage Vg turns the power transistor on when it is applied to its gate, characterized in that the protection circuit comprises a control circuit (2) to couple the output of the bias circuit to the gate of the power transistor and to monitor the difference in voltage between the drain and the source of the power transistor so that, when the difference exceeds a given threshold, it prevents the application of the voltage Vg to the gate of the power transistor and thus turns the power transistor off.

2. Protection circuit according to Claim 1, characterized in that the bias circuit comprises, in series, a voltage threshold circuit (Z1, C1, C2, R1, D1, Q3) connected between the first terminal and the second terminal and a voltage conversion circuit (R2-R9, C3-C5, D2, D3, G).

3. Protection circuit according to Claim 1, characterized in that the control circuit (R10-R14, C6-C8, Z2, Q2) has monitoring means (R11, R13, R14, C6, C8, Z2) to monitor the difference in potential between the drain and the source of the power transistor (Q1) and turn-off means (Q2) to short-circuit the gate and the source of the power transistor under the control of the monitoring means.

4. Use of a protection circuit according to at least one of the preceding claims, associated with a DC supply, this circuit being connected between the output terminals of the supply.
